# EUROPÄISCHE PATENTSCHRIFT

(11) **EP 1 867 018 B1**
(45) Veröffentlichungstag und Bekanntmachung des Hinweises auf die Patenterteilung: **12.08.2015**
(21) Anmeldenummer: 06723740.4
(22) Anmeldetag: 25.03.2006
(51) Int. Cl.: H02B 1/21, H02B 1/36

(54) **ELEKTRISCHE NIEDERSPANNUNGSSCHALTANLAGE**
ELECTRICAL LOW-VOLTAGE SWITCHGEAR
INSTALLATION DE COMMUTATION ELECTRIQUE BASSE TENSION

(30) Priorität: 07.04.2005 DE 102005015944
(43) Veröffentlichungstag der Anmeldung: 19.12.2007
(73) Patentinhaber: ABB AG, 68309 Mannheim (DE)
(72) Erfinder: KRAFT, Klaus, 69123 Heidelberg (DE); MERKEL, Hans-Peter, 69198 Schriesheim (DE)
(86) Internationale Anmeldenummer: PCT/EP2006/002762
(87) Internationale Veröffentlichungsnummer: WO 2006/105879

(56) Entgegenhaltungen:
- EP-A- 0 678 951
- DE-A1- 10 315 646
- US-A- 3 303 395
- US-A- 4 180 845
- US-B1- 6 215 654

## Beschreibung

Die Erfindung betrifft eine elektrische Niederspannungsschaltanlage gemäß dem Oberbegriff des Anspruches 1.

Elektrische Niederspannungsschaltanlagen umfassen sogenannte Leistungsteile oder Leistungseinheiten und Kontrolleinheiten, von denen die Leistungseinheiten Schaltgeräte, Motorschutzschalter, Schütze und dergleichen umfassen, und Kontrolleinheiten, die zur Ansteuerung der Leistungseinheit dienen und darüber hinaus Steuer-, Maß- und Schutzfunktionen für die Leistungseinheit besitzen.

Bei der bekannten Schaltanlage sind die Kontrolleinheiten und Leistungseinheiten in einem einzigen Raum d. h. einem gemeinsamen Gehäuse oder Modul untergebracht, beispielsweise in einem Einschub, oder Einsatz.

Wenn sich aufgrund eines Fehlers die Aufgabe stellt, eine Leistungseinheit auszutauschen, muss gleichzeitig auch die zugehörige Kontrolleinheit, die mit der Leistungseinheit in einem Raum untergebracht ist, ausgetauscht werden.

Aus der DE 103 15 646 A1 ist eine Schaltanlage bekannt geworden, bei der mehrer Einschubebenen zur Aufnahme von Einschüben vorgesehen sind, wobei Maßnahmen getroffen sind, mit denen vermieden werden kann, dass ein bestimmter Einschub in ein Einschubfach eingeführt wird, welches nicht für ihn bestimmt ist. Zu diesem Zweck besitzen der Einschub und der Schaltschrank Kodiereinrichtungen, mit denen ein Spannungssignal oder ein Frequenzsignal erzeugt wird, wobei ein Teil der Kodierungseinrichtung in Schaltschrank und ein anderer Teil im Einschub vorhanden sein müssen.

Aufgabe der Erfindung ist es, eine elektrische Schaltanlage der eingangs genannten Art zu schaffen, bei der die Austauschbarkeit sowohl der Leistungseinheiten als auch der Kontrolleinheiten vereinfacht ist.

Diese Aufgabe wird durch die Merkmale des Anspruches 1 gelöst.

Erfindungsgemäß also sind die Kontrolleinheiten von den Leistungseinheiten räumlich voneinander getrennt, in eigenen Räumen untergebracht und über Signalleitungen miteinander verbunden, wobei die Räume der Kontrolleinheit von den Räumen der Leistungseinheiten mittels einer Trennwand getrennt sind.

Diese räumliche Trennung bewirkt auf der einen Seite, dass eine Kontrolleinheit und/oder eine Leistungseinheit unabhängig voneinander ausgetauscht werden kann bzw. können. Dies wird insbesondere dadurch erreicht, dass die Leistungseinheiten und die Kontrolleinheiten jeweils in eigenen Räumen untergebracht sind.

Die Kontrolleinheiten sind mit den zugehörigen Leistungseinheiten mit Signalleitungen verbunden, die in bevorzugter Weise als Busleitungen ausgebildet sind. Diese Busleitung bewirkt die Unabhängigkeit der beiden; eine Zugehörigkeit zu dem entsprechenden Leistungsteil wird ausschließlich durch die Software in der Kontrolleinheit bewirkt.

Derartige Kontrolleinheiten sind beispielsweise aus der DE 103 49 906 oder DE 103 15 623 zu entnehmen.

Der Zugang zu den Kontrolleinheiten ist durch eine Schranktür gewährleistet, die die Kontrolleinheiten vor unberechtigtem Zugriff sichert.

Gemäß einer besonders vorteilhaften Ausgestaltung können die Leistungseinheiten von den Kontrolleinheiten durch eine Trennwand unterteilt sein, so dass dann, wenn eine Leistungseinheit einen Störfall hat, die Tür zum Kontrolleinheitenraum geöffnet bleiben kann.

Die Verwendung von Trennwänden und dergleichen als solche ist bekannt beispielsweise aus der US-B1-6215654 oder der US-A-3303395.

Die Verwendung einer Busleitung als Signalleitung hat den weiteren Vorteil, dass die Leistungseinheiten und die Kontrolleinheiten unabhängig voneinander weiter entwickelt werden können, was bedeutet, dass beide unabhängig voneinander an weitere Forderungen angepasst oder verbessert werden können. Die Verwendung von nicht als Bauleitungen ausgebildeten Signalleitungen ist prinzipiell möglich.

Die Kontrolleinheiten, die an bestimmten, ihren Leistungseinheiten zugehörigen Stellen eingebaut sind, überprüfen dann auch selbst, ob sie an der richtigen Stelle eingesetzt sind, wie aus den DE 103 15 730 oder DE 103 15 646 beschrieben ist. Ist die Kontroll-einheit an einer nicht passenden Stelle eingebaut, erfolgt eine Fehlermeldung innerhalb einer Fehlerroutine.

Weitere vorteilhafte Ausgestaltungen und Verbesserungen sind den weiteren Unterensprüchen zu entnehmen.

Anhand der Zeichnung, in der ein Ausführungsbeispiel der Erfindung schematisch dargestellt ist, sollen die Erfindung sowie weitere vorteilhafte Ausgestaltungen und Verbesserungen der Erfindung sowie weitere Vorteile näher erläutert und beschrieben werden.

Es zeigen
- Fig. 1: eine Aufsicht auf eine Niederspannungsschaltanlage und
- Fig. 2: eine Schaltungsanordnung zur Darstellung der Zuordnung von Leistungs- und Kontrolleinheiten.

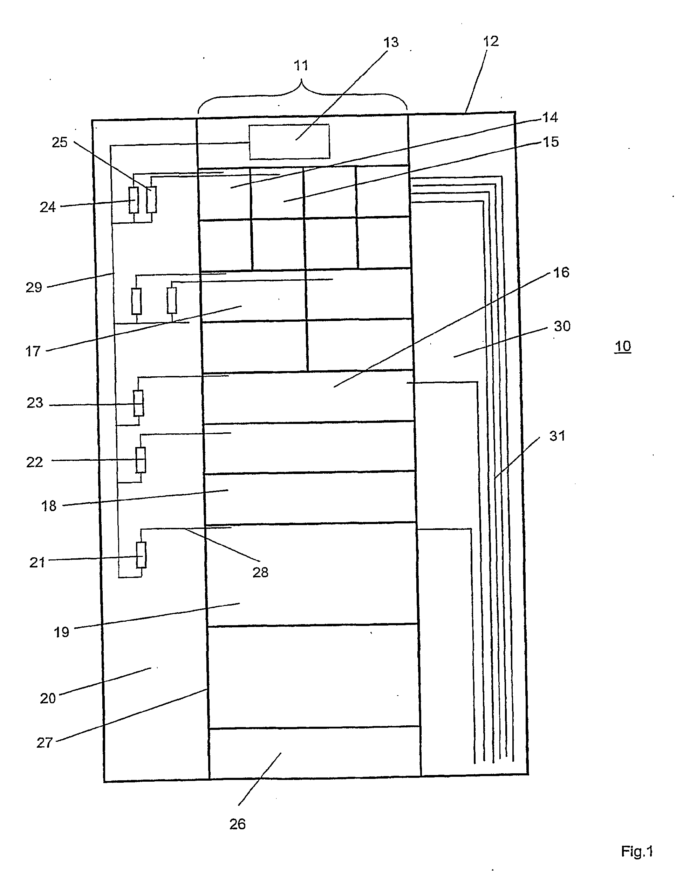

Die Fig. 1 zeigt eine Schaltanlage 10, die einen mittleren Bereich 11 aufweist, der in seinem oberen, der Deckwand 12 zugewandten Abschnitt einen Raum aufweist, in dem sich eine zentrale Datenschnittstelle 13 befindet.

In dem Bereich unterhalb der zentralen Datenschnittstelle 13 befindet sich ein Leistungsteil mit Fächern Leistungseinheiten 14, 15, 16, 17, 18 und 19. Diese Leistungseinheiten 14 bis 19 sind in Einschüben untergebracht, wobei die Leistungseinheiten 14 und 15 eine erste räumliche Größe aufweisen; die Leistungseinheit 17 eine zweite Größe; die Leistungseinheit 18 eine dritte Größe; die Leistungseinheiten 16 und 19 eine vierte bzw. fünfte Größe.

Bei der Ausführung gemäß Fig. 1 von dem Leistungsabschnitt 11 getrennt befindet sich daneben ein vertikal verlaufender Raum 20, in dem Kontrolleinheiten 21, 22, 23, 24 und 25 untergebracht sind. Dabei sind so viele Kontrolleinheiten vorgesehen, wie Leistungseinheiten vorhanden sind. Im Bodenbereich des Leistungsabschnittes 11 ist ein Raum 26 vorgesehen, der beispielsweise zur Kühlung durch Konvektion dient. Der Raum 20 ist von dem Leistungsabschnitt 11 durch eine Trennwand 27 getrennt, so dass dann, wenn in einer Leistungseinheit 16 ein Schaden auftritt, der Kontrollraum 20 nicht beeinflusst ist, so dass beispielsweise die Tür, die den Kontrollraum 20 verschließt, hier aber nicht dargestellt ist, geöffnet bleiben.kann.

Wie oben erwähnt, sind die Kontrolleinheiten in den oben angegebenen Patentanmeldungen beschrieben.

Die Kontrolleinheiten sind mit den Leistungseinheiten mit als Busleitungen 28 ausgebildeten Signalleitungen verbunden;,dabei ist lediglich die Verbindung zwischen der Kontrolleinheit 21 und der Leistungseinheit 19 beziffert.

Wie aus Fig. 1 hervorgeht, sind die Leistungs- und Kontrolleinheiten in getrennten Funktionsräumen untergebracht. Aufgrund der erfindungsgemäßen Ausgestaltung sind wie Leistungs- und Kontrolleinheiten funktionell voneinander unabhängig und können auch funktionell voneinander unabhängig ausgetauscht werden. Dabei überprüfen die Kontrolleinheiten die elektrischen Daten der zugeordneten Leistungseinheiten und überwachen über einen Datenvergleich den tatsächlichen Einbauplatz mit der vorgesehenen Schaltfeldkonfiguration, d. h. sie überwachen, ob sie korrekt am richtigen Platz eingebaut sind.

Die Kontrolleinheiten speichern dabei aktuelle Parameter und Daten der Leitungseinheiten, auch bei Spannungsausfall.

Ober eine Signalleistung 29, die mit den einzelnen Kontrolleinheiten verbunden ist, werden die Daten der Kontrolleinheiten 21, 22, 23, 24 und 25 zu der zentralen Datenschnittstelle 13 übertragen, wo sie zwischengespeichert werden. Wenn nun eine Kontrolleinheit, beispielsweise die Kontrolleinheit 21, durch eine sogenannte jungfräuliche Kontrolleinheit ausgetauscht werden soll, dann werden die der alten Kontrolleinheit zugehörigen Daten aus der Datenschnittstelle 13 über die Signalleitung 29 der Kontrolleinheit 21 "neu" zugeleitet, so dass die Kontrolleinheit 21 "neu" parametriert und aktualisiert wird.

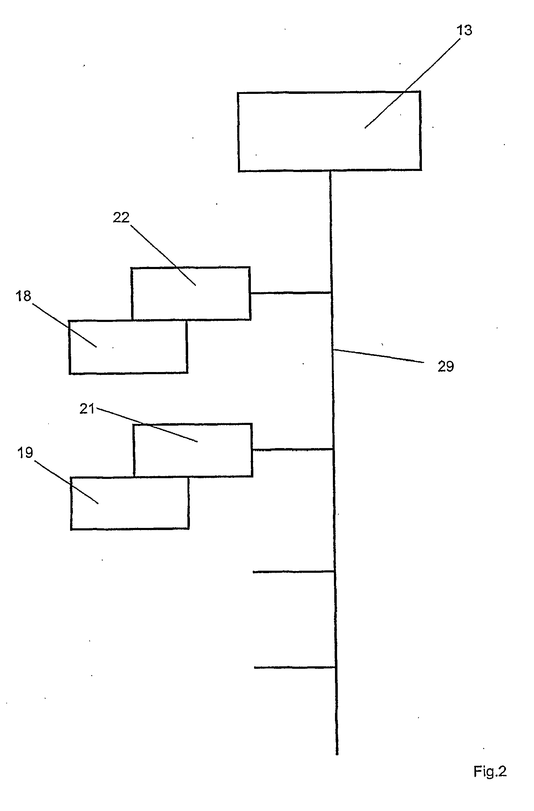

Die Fig. 2 zeigt die Zuordnung von Kontrolleinheit zu Leistungseinheit. Beispielsweise ist die Kontrolleinheit 22 mit der Leistungseinheit 18 und die Kontrolleinheit 21 mit der Leistungseinheit 19 verbunden dargestellt. Die Ausgangssignale der Kontrolleinheiten 22, 21 werden auf die Datenleitung 29 übertragen, von wo aus sie zur zentralen Datenschnittstelle 13 übertragen werden.

Die Energieversorgung der Leistungseinheiten erfolgt über in einem Leistungshebelraum 30 verlegte Leistungskabel 31. Der Leistungskabelraum 30 befindet sich auf der dem Kontrolleinheitenraum entgegengesetzten Seite des mittleren Bereiches 11.

## Patentansprüche

1. Elektrische Niederspannungsschaltanlage, mit wenigstens zwei in Einschüben oder Gehäusen untergebrachten Leistungseinheiten (14 bis 19) und mit den Leistungseinheiten (14 bis 19) zugeordneten Kontrolleinheiten (21 bis 25) die zur Ansteuerung der jeweils zugeordneten Leistungseinheiten dienen, **dadurch gekennzeichnet, dass** die Kontrolleinheiten (21 bis 25) von den jeweils zugehörigen Leistungseinheiten (14 bis 19) räumlich voneinander getrennt in eigenen Räumen untergebracht und über Signalleitungen (28) miteinander verbunden sind, wobei die Räume der Kontrolleinheiten (21 bis 25) von den Räumen der jeweils zugehörigen Leistungseinheiten (14 bis 19) mittels einer Trennwand getrennt sind.

2. Elektrische Niederspannungsschaltanlage nach Anspruch 1, **dadurch gekennzeichnet, dass** die Signalleitungen (28) als Busleitungen ausgebildet sind.

3. Elektrische Niederspannungsschaltanlage nach einem der vorherigen Ansprüche, **dadurch gekennzeichnet, dass** die Leistungseinheiten (14 bis 19) und die Kontrolleinheiten (25 bis 29) funktionell unabhängig voneinander sind und unabhängig voneinander austauschbar sind.

4. Elektrische Niederspannungsschaltanlage nach einem der vorherigen Ansprüche, **dadurch gekennzeichnet, dass** der Raum (20) der Kontrolleinheiten (25 bis 29) durch eine separate Schranktür vor mechanischem Zugriff geschützt und der Zugang zu den Kontrolleinheiten (25 bis 29) sicher von den Leistungsteilen (14 bis 19) getrennt ist.

## Claims

1. Electrical low-voltage switchgear assembly having at least two power units (14 to 19) accommodated in withdrawable parts or housings and control units (21 to 25) associated with the power units (14 to 19), said control units serving to control the respectively associated power units, **characterized in that** the control units (21 to 25) in a manner physically isolated from the respectively associated power units (14 to 19) are accommodated in dedicated areas and are connected to one another via signal lines (28), wherein the areas of the control units (21 to 25) are isolated from the areas of the respectively associated power units (14 to 19) by means of a partition wall.

2. Electrical low-voltage switchgear assembly according to Claim 1, **characterized in that** the signal lines (28) are in the form of bus lines.

3. Electrical low-voltage switchgear assembly according to one of the preceding claims, **characterized in that** the power units (14 to 19) and the control units (25 to 29) are functionally independent of one another and can be replaced independently of one another.

4. Electrical low-voltage switchgear assembly according to one of the preceding claims, **characterized in that** the area (20) of the control units (25 to 29) is protected against mechanical access by a separate cabinet door, and access to the control units (25 to 29) is safely isolated from the power parts (14 to 19).

## Revendications

1. Installation de commutation électrique basse tension, comprenant au moins deux unités de puissance (14 à 19) montées dans des tiroirs ou des boîtiers et des unités de contrôle (21 à 25) associées aux unités de puissance (14 à 19), qui servent à commander les unités de puissance respectivement associées, **caractérisée en ce que** les unités de contrôle (21 à 25) sont montées dans des espaces propres de manière mutuellement séparée spatialement des unités de puissance respectivement associées (14 à 19) et sont connectées les unes aux autres par le biais de conduites de signaux (28), les espaces des unités de contrôle (21 à 25) étant séparés des espaces des unités de puissance respectivement associées (14 à 19) au moyen d'une paroi de séparation.

2. Installation de commutation électrique basse tension selon la revendication 1, **caractérisée en ce que** les conduites de signaux (28) sont réalisées sous forme de lignes de bus.

3. Installation de commutation électrique basse tension selon l'une quelconque des revendications précédentes, **caractérisée en ce que** les unités de puissance (14 à 19) et les unités de contrôle (25 à 29) sont fonctionnellement indépendantes les unes des autres et peuvent être remplacées indépendamment les unes des autres.

4. Installation de commutation électrique basse tension selon l'une quelconque des revendications précédentes, **caractérisée en ce que** l'espace (20) des unités de contrôle (25 à 29) est protégé par une porte d'armoire séparée contre un accès mécanique et l'accès aux unités de contrôle (25 à 29) est séparé de manière sûre des unités de puissance (14 à 19).
